# FASCICULE DE BREVET EUROPEEN

(11) **EP 2 174 198 B1**
(45) Date de publication et mention de la délivrance du brevet: **15.05.2013**
(21) Numéro de dépôt: 08836041.7
(22) Date de dépôt: 23.07.2008
(51) Int. Cl.: G05D 9/12, G05D 7/06

(54) **DISPOSITIF POUR CONTRÔLER L'ECOULEMENT D'UN LIQUIDE ET PROCEDE METTANT EN OEUVRE CE DISPOSITIF**
VORRICHTUNG ZUR STEUERUNG DES FLUSSES EINER FLÜSSIGKEIT UND VERFAHREN UNTER VERWENDUNG EINER SOLCHEN VORRICHTUNG
DEVICE FOR CONTROLLING THE FLOW OF A LIQUID AND METHOD USING SAID DEVICE

(30) Priorité: 10.08.2007 FR 0757046
(43) Date de publication de la demande: 14.04.2010
(73) Titulaire: de Beaumarchais, Olivier, 92100 Boulogne (FR)
(72) Inventeur: de Beaumarchais, Olivier, 92100 Boulogne (FR)
(74) Mandataire: Marconnet, Sébastien
(86) Numéro de dépôt international: PCT/FR2008/001084
(87) Numéro de publication internationale: WO 2009/044001

(56) Documents cités:
- EP-A- 0 599 341
- US-A- 5 316 181
- US-A- 5 624 409
- US-A- 6 149 071
- US-A1- 2004 211 929
- US-B1- 6 286 764

## Description

. L'invention concerne un dispositif pour contrôler l'écoulement d'un liquide et un procédé mettant en oeuvre ce dispositif. L'invention permet d'arrêter automatiquement l'écoulement d'un liquide lorsqu'un volume désiré est atteint, ce volume ayant été préalablement « appris » au dispositif au cours d'une phase d'apprentissage. L'invention a notamment pour but de remplir de liquide un récipient sans surveillance.

. L'invention trouve une application particulièrement avantageuse, mais non exclusive, dans le domaine domestique, pour le remplissage d'une baignoire ou d'un lavabo, d'un réservoir, d'un jerrican, ou d'un abreuvoir.
Le document US-A-6,149,071 divulgue un système de contrôle de flux.

. On connaît un pistolet d'arrosage décrit dans la demande de brevet EP-1655584, qui permet de calculer la quantité d'eau consommée lors de l'arrosage. Toutefois, il est nécessaire de connaitre précisément la valeur du volume à verser afin d'obtenir un arrosage souhaité.

. On connaît également des dispositifs d'arrosage automatique qui permettant d'effectuer un arrosage de Jardin à intervalle régulier (par exemple tous les jours) pendant une durée choisie par l'utilisateur. Toutefois, de tels dispositifs ne permettent pas de garantir que le même volume d'eau sera consomme d'un arrosage à l'autre. En effet, le débit de l'écoulement peut varier suivant par exemple le nombre de personnes prélevant de l'eau sur le réseau. Or si le débit varie pour une même durée d'arrosage, la quantité d'eau sera différente. L'invention permet de s'affranchir du facteur de variation de débit par le calcul du volume permettant ainsi de délivrer une quantité précise de liquide.

. L'invention permet de répéter très précisément le remplissage d'un récipient à un volume souhaité, sans connaître a priori la quantité de liquide à verser dans ce récipient et sans avoir à surveiller ce remplissage.

. A cet effet, lors d'une phase d'apprentissage, l'utilisateur remplit un récipient pendant que le dispositif mesure le volume de liquide consommé. Lorsque le niveau de liquide souhaité par l'utilisateur est atteint, l'utilisateur actionne le dispositif, de sorte que le volume correspondant à ce niveau est mémorisé, en tant que volume de référence (consigne), à l'intérieur du dispositif.

. Ensuite, dans une phase d'utilisation, le dispositif mesure le volume écoulé et dès que la valeur du volume de référence est atteinte, le dispositif coupe automatiquement le débit d'eau. Ainsi l'utilisateur pourra répéter le remplissage du récipient toujours à un même niveau (celui correspondant au volume de référence enregistré dans la phase d'apprentissage) sans avoir à surveiller l'écoulement du liquide.

. Le réglage du volume de référence est transparent pour l'utilisateur qui n'a pas à connaître a priori la valeur du volume de liquide correspondant au niveau désiré. En effet, pour configurer le dispositif, l'utilisateur a juste à indiquer le commencement et la fin de la période d'apprentissage correspondant au moment où la quantité de liquide désirée a été délivrée, le volume de référence étant calculé par exemple à partir du débit mesuré pendant la phase d'apprentissage et de la durée de cette phase d'apprentissage.

. Autrement dit, l'invention a pour objet un dispositif simple, rapporté à un robinet ou intégré à celui-ci, qui dans un premier temps va calculer le volume écoulé désiré, mémoriser celui-ci, puis par restitution de cette valeur de volume écoulé couper l'alimentation lorsque cette valeur volume est atteinte, permettant ainsi de façon reproductible de remplir sans surveillance, un contenant ou de délivrer une quantité de liquide qui aura donc été calculée préalablement grâce à ce même dispositif. Ce dispositif par sa simplicité d'utilisation permet de reproduire cette opération de mesure, d'enregistrement et de restitution facilement et rapidement.

. Bien entendu, plusieurs volumes de référence peuvent être mémorisés, ces volumes de référence pouvant être associés à un utilisateur et/ou à un récipient afin de faciliter leur identification. Par exemple, pour une baignoire, un premier volume de référence peut correspondre au volume de remplissage du bain du bébé, tandis qu'un deuxième volume de référence peut correspondre au volume de remplissage du bain des parents. Un troisième volume pourra par exemple correspondre au remplissage d'un autre récipient, tel qu'un lavabo.

. Le dispositif peut comporter en outre un compteur de volume qui mesure le volume global consommé depuis sa dernière remise à zéro.

. Le dispositif peut également comporter des compteurs partiels associés à chacun des volumes de référence mémorisés, ces compteurs mesurant la consommation de liquide pour atteindre chacune des valeurs de référence. Ainsi, il est possible de mesurer la consommation engendrée par chaque utilisateur (parents, bébé) correspondant à chaque volume de référence.

. En variante, l'utilisateur pourra par affichage indiquer au préalable un volume connu qui sera délivré en tant que volume de référence.

. Le dispositif est de préférence accroché à un canal d'arrivée de liquide par l'intermédiaire d'une liaison rotule afin de permettre l'orientation du jet de liquide sortant du dispositif. En outre, en cas de choc, la liaison rotule évite une rupture entre le dispositif et le canal, puisqu'elle autorise un déplacement relatif de l'un par rapport à l'autre.

. Pour les utilisations avec une baignoire notamment, le dispositif est relié à une extrémité du robinet au moyen d'un filetage. De préférence, un jeu d'embouts filetés est prévu, afin que le dispositif puisse s'adapter à plusieurs types de robinets. Pour les utilisations en extérieur, l'accrochage du dispositif à des tuyaux d'arrosage peut être effectué au moyen d'attaches classiques de type « gardena » (marque déposée).

. Pour relier le canal d'arrivée de liquide avec le dispositif, on peut en variante utiliser un embout universel, par exemple en caoutchouc, qui s'adapte par compression au canal d'arrivée de liquide.

. L'invention peut également être utilisée pour l'arrosage, le dispositif assurant alors le contrôle du volume d'eau à déverser, par exemple pour arroser un type de plante particulier. Dans ce cas, on ne cherche plus à contrôler le remplissage d'un récipient mais à contrôler la quantité d'eau écoulée pour avoir toujours, quelles que soient les variations de débit, un arrosage de même qualité.

. L'invention concerne donc un procédé pour délivrer une quantité d'eau non déterminée au préalable mais déterminée par apprentissage au moyen d'un dispositif de contrôle d'écoulement d'un liquide commandé par un utilisateur caractérisé en ce qu'il comporte les étapes suivantes :
- l'étape, pour l'utilisateur, d'indiquer le commencement et la fin d'une phase d'apprentissage,
- l'étape, pour le dispositif de contrôle d'écoulement du liquide, de calculer un volume de liquide écoulé pendant la phase d'apprentissage,
- l'étape, pour le dispositif de contrôle d'écoulement du liquide, de mémoriser, en tant que valeur de référence, la valeur du volume de liquide calculé lors de la phase d'apprentissage,
- l'étape, pour le dispositif de contrôle d'écoulement du liquide, lors d'une phase d'utilisation, de mesurer un volume de liquide écoulé, et
- l'étape, pour le dispositif de contrôle d'écoulement du liquide, d'arrêter l'écoulement du liquide lorsque la valeur du volume mesuré atteint la valeur de référence qui a été calculée et enregistrée lors de la phase d'apprentissage,
- de manière à pouvoir délivrer sans surveillance de façon reproductible un volume de liquide qui aura été calculé préalablement pendant la phase d'apprentissage.

. Selon une mise en oeuvre, il comporte l'étape, pour le dispositif de contrôle d'écoulement du liquide, de calculer la valeur de volume de liquide écoulé sur la phase d'apprentissage à partir de la durée (t) de la phase d'apprentissage et du débit mesuré sur ladite phase d'apprentissage.

. Selon une mise en oeuvre, il comporte l'étape, pour le dispositif de contrôler d'écoulement du liquide, de déclencher une alarme lorsque le volume de référence est atteint.

. Selon une mise en oeuvre, il comporte l'étape, pour le dispositif de contrôle d'écoulement du liquide, de mémoriser plusieurs valeurs de référence.

. Selon une mise en oeuvre, il comporte l'étape, pour le dispositif de contrôle d'écoulement du liquide, d'associer une étiquette correspondant à un utilisateur à chacun des volumes de référence mémorisés afin de faciliter leur identification.

. Selon une mise en oeuvre, il comporte l'étape, pour le dispositif de contrôle d'écoulement du liquide, de mesurer la température du liquide lors de son écoulement.

. Selon une mise en oeuvre, il comprend l'étape, pour le dispositif de contrôle d'écoulement du liquide, de déclencher une alarme lorsqu'un écart de température supérieur à une valeur seuil, par exemple 0.5 degré, est détecté.

. L'invention concerne en outre un dispositif de contrôle d'écoulement d'un liquide caractérisé en ce qu'il comporte :
- une interface permettant à un utilisateur d'indiquer le commencement et la fin d'une phase d'apprentissage,
- des moyens pour calculer le volume de liquide écoulé sur ladite phase d'apprentissage,
- des moyens pour mémoriser, en tant que volume de référence, la valeur du volume de liquide calculé pendant la phase d'apprentissage, et
- des moyens pour arrêter l'écoulement du liquide lorsque la valeur du volume mesuré a atteint la valeur du volume de référence qui a été calculé et enregistré lors de phase d'apprentissage,
- de manière à pouvoir délivrer sans surveillance de façon reproductible un volume de liquide qui aura été calculé préalablement pendant la phase d'apprentissage.
Selon une réalisation, les moyens pour mesurer le débit du liquide comportent un débimètre de type optique ou électromagnétique.

. Selon une réalisation, les moyens pour calculer le volume de référence comportent des moyens pour mesurer ledit volume à partir du débit mesuré sur la phase d'apprentissage et de la durée de la phase d'apprentissage.

. Selon une réalisation, il comporte un générateur/débitmètre installé à l'intérieur d'un canal ménagé dans le dispositif présentant une paroi à l'intérieur duquel circule un liquide, le générateur/débitmètre comportant :
- un élément rotatif installé à l'intérieur du canal entraîné en rotation par l'écoulement de l'eau dans le canal,
- au moins un aimant étant fixé sur une des faces de l'élément rotatif,
- une bobine positionnée à l'extérieur du canal de l'autre côté de la paroi en regard de l'élément rotatif,
- au moins une ferrites associée à la bobine et fixée à la paroi (47.1) étant positionnée de sorte que le ou les aimants (55) passe à leur voisinage lors de la rotation de la roue (49).

. Selon une réalisation, l'élément rotatif est un élément rotatif hélicoïdal apte à tourner autour d'un axe orienté suivant le sens d'allongement du canal.

. Selon une réalisation, l'élément rotatif est une roue à aubes apte à tourner autour d'un axe orienté transversalement par rapport au canal.

. Selon une réalisation, il est rapporté par rapport à un canal de sortie de liquide et comporte un embout à liaison rotule destiné à être relié à ce canal de sortie de liquide par vissage par exemple.

. Selon une réalisation, il est intégré à un canal de sortie de liquide.

. L'invention sera mieux comprise à la lecture de la description qui suit et à l'examen des figures qui l'accompagnent. Ces figures ne sont données qu'à titre illustratif mais nullement limitatif de l'invention. Elles montrent :

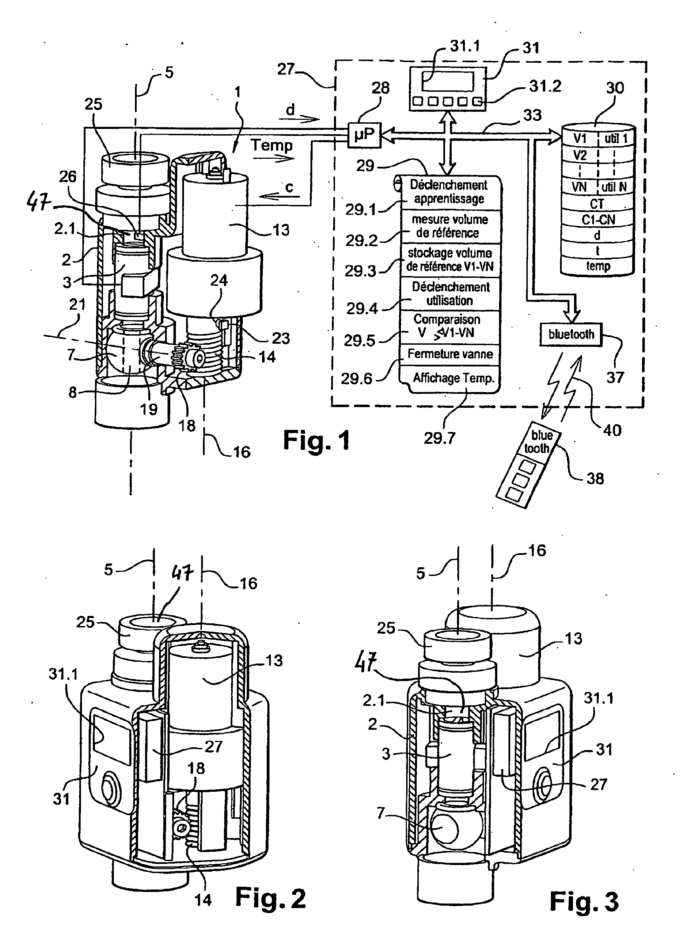

. Figure 1 : une vue en trois dimensions du dispositif de contrôle d'écoulement de liquide selon l'invention accompagnée d'une représentation schématique de son unité de commande ;

. Figures 2-3 : des représentations en trois dimensions de l'intérieur du dispositif selon l'invention suivant deux angles de vue opposés ;

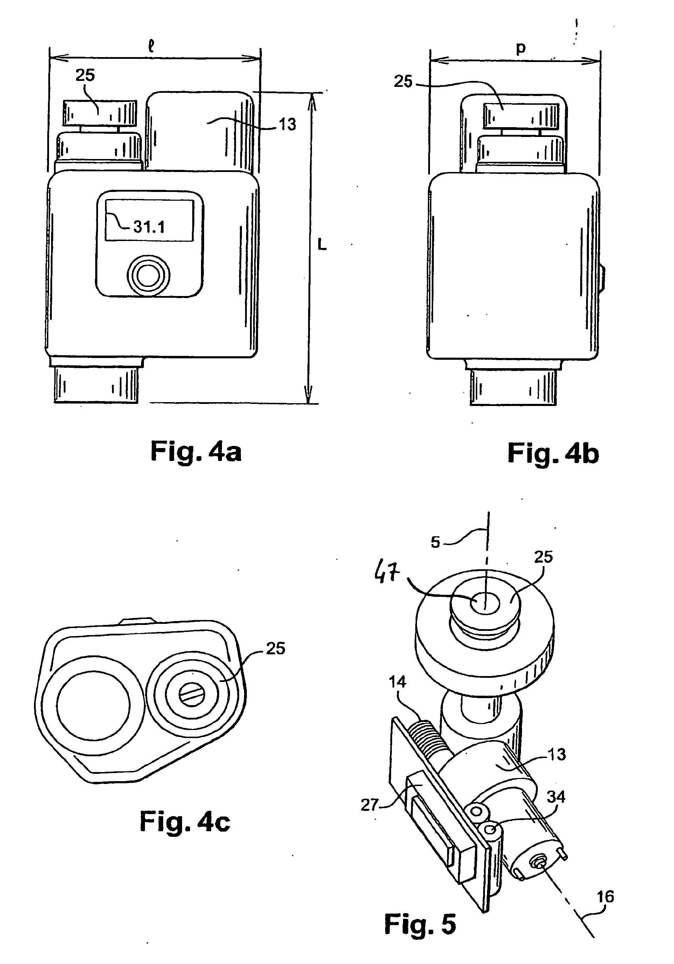

. Figures 4a-4c: des vues de face, de côté et de dessus du dispositif selon l'invention mettant en évidence les dimensions de ce dispositif ;

. Figure 5: une vue en trois dimensions d'une architecture horizontale du dispositif selon l'invention ;

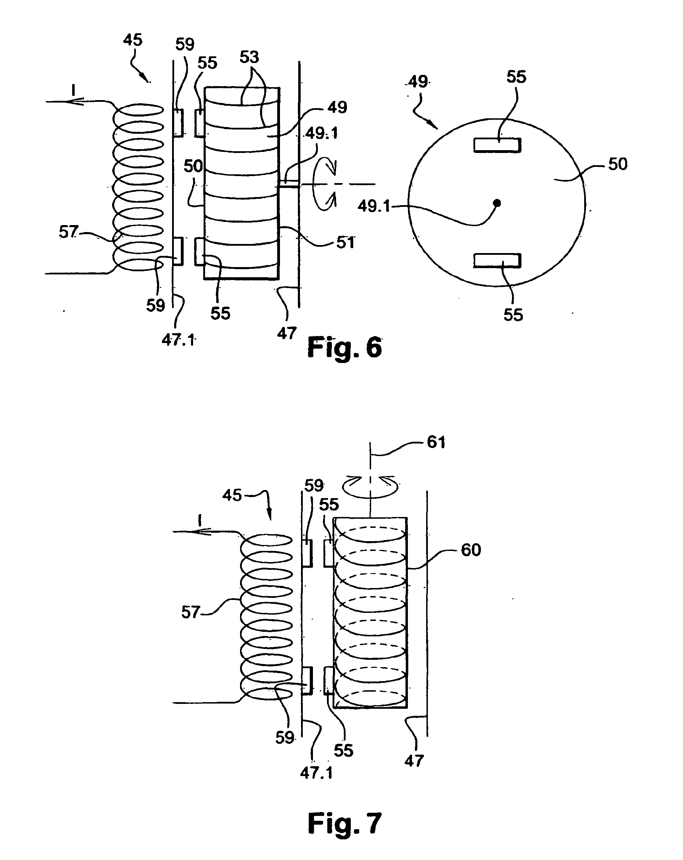

. Figure 6 : une représentation schématique d'un premier mode de réalisation d'un générateur/débitmètre selon l'invention et une vue de côté d'une roue à aubes qu'il comporte ;

. Figure 7 : une représentation schématique d'un deuxième mode de réalisation d'un générateur/débitmètre selon l'invention.

. Les éléments identiques conservent la même référence d'une figure à l'autre.

. La figure 1 montre une vue en trois dimensions du dispositif 1 de contrôle d'écoulement de liquide selon l'invention.

. Le dispositif 1 comporte un carter 2 à l'intérieur duquel a été ménagé une ouverture 2.1 formant un canal 47 qui s'étend suivant l'allongement de ce boîtier. Un débitmètre 3 tubulaire est positionné à l'intérieur de cette ouverture 2.1, la paroi du débitmètre 3 entrant en coopération de manière étanche avec les parois de l'ouverture 2.1. Ces éléments 2, 3 présentent un axe 5 de symétrie suivant lequel s'écoule le liquide à l'intérieur du dispositif.

. A l'extrémité du débitmètre 3 est positionnée une vanne 7 en forme de boule susceptible de laisser passer ou de bloquer le liquide traversant le dispositif 1. A cet effet, la vanne 7 comporte une cavité 8 traversante qui s'étend sur toute la longueur de son diamètre. Lorsque la cavité 8 est en face de l'ouverture 2.1 (vanne en position ouverte), le liquide passe à travers la vanne 7. Tandis que lorsque la paroi pleine de la vanne 7 se situe en face de l'ouverture 2.1 (vanne en position fermée), le liquide est bloqué. Pour passer de la position ouverte à la position fermée, il suffit de faire tourner la vanne 7 d'un quart de tour.

. A cet effet, le dispositif 1 comporte un moteur 13, par exemple de type à courant continu, entraînant en rotation une tige 14 sans fin. L'axe 16 de rotation du moteur 13 et de la tige 14 est orienté parallèlement à l'axe 5 du dispositif.

. La tige 14 entre en coopération avec une roue dentée 18 reliée à la vanne 7 par l'intermédiaire d'un arbre 19 de transmission. L'axe 21 de rotation de la vanne 7 et de l'arbre 19 est perpendiculaire aux axes 5 et 16.

. Ainsi lorsqu'il est actionné, le moteur 13 fait tourner la tige 14 qui transmet son mouvement de rotation à la valve 7 via la roue 18 et l'arbre 19.

. Pour détecter la position ouverte ou fermée de la vanne 7, on utilise de préférence un capteur de position 23 accroché au carter fixe du moteur 13. Ce capteur 23 est destiné à repérer la position d'un repère 24 accroché à la vis 14. Lorsque le repère 24 est situé devant le capteur 23, la vanne 7 est en position ouverte ; tandis que lorsque le repère 24 n'est pas situé devant ce capteur 23 (le moteur 13 ayant fait tourner la vanne 7 d'un quart de tour), la vanne 7 est en position fermée (ou inversement).

. Le dispositif 1 est relié à un canal de sortie de liquide (non représenté) au moyen d'un embout 25 formant, de préférence, une liaison rotule entre le dispositif et le canal afin de limiter le risque de rupture en cas de choc. Cet embout 25 peut en outre être fileté pour s'adapter à un taraudage ménagé par exemple dans un robinet de baignoire. En variante, le dispositif est intégré dans le canal d'arrivée de liquide.

. Le dispositif 1 comporte en outre une unité de commande 27 comportant un microprocesseur 28, une mémoire programme 29, une mémoire de données 30 et une interface de contrôle 31 comprenant, s'il y a lieu, un écran 31.1. Ces éléments 28-31 sont reliés entre eux par l'intermédiaire d'un bus 33 de communication.

. Par ailleurs, le débitmètre 3 est relié à une entrée du microprocesseur 28 afin de transmettre la valeur du débit mesuré à ce microprocesseur 28. Tandis que le moteur 13 est relié à une sortie du microprocesseur 28, de sorte que le microprocesseur 28 peut commander la mise en rotation du moteur 13.

. Pour « apprendre » au dispositif 1 le volume de liquide à partir duquel il doit arrêter l'écoulement, l'utilisateur actionne le dispositif via l'interface 31 de manière à exécuter le programme 29.1 qui déclenche la phase d'apprentissage au cours de laquelle la vanne 7 est en position ouverte. Le début de cette phase d'apprentissage est le cas échéant signifié à l'utilisateur par un signal sonore et/ou lumineux.

. L'utilisateur peut alors déclencher l'écoulement de liquide à travers le dispositif 1, de sorte que le débitmètre 3 mesure le débit du liquide écoulé et transmette la valeur d de mesure au microprocesseur 28 qui la stocke dans la mémoire 30. Lorsque la quantité d'eau souhaitée (dont il ne connaît a priori pas le volume) a été versée, l'utilisateur indique la fin de la phase d'apprentissage, en actionnant de nouveau l'interface 31. La durée t de la phase d'apprentissage comprise entre le déclenchement et la fin de la phase d'apprentissage commandés par l'utilisateur est également stockée dans la mémoire 30.

. En exécutant le programme 29.2, le microprocesseur 28 calcule alors le volume V1 correspondant à la quantité de liquide écoulée pendant la phase d'apprentissage qui est égal, pour un débit constant, au produit du débit d mesuré pendant la phase d'apprentissage et de la durée t de cette phase d'apprentissage. La formule est bien sûr adaptée lorsque le débit varie au cours de la phase d'apprentissage, en intégrant les débits sur la période de temps sur laquelle ils ont été mesurés et cela pendant toute la phase d'apprentissage.

. Lors de l'exécution du programme 29.3, le microprocesseur 28 enregistre alors le volume V1 mesuré en tant que volume de référence à l'intérieur de la mémoire 30. Dans une réalisation, il est possible de mémoriser une étiquette d'utilisateur « util1 » ou de récipient auquel correspond ce volume V1 de référence.

. Plusieurs volumes de référence V1-VN correspondant à plusieurs utilisateurs util1-utilN (ou plusieurs récipients) peuvent être mémorisés dans la mémoire 30. Pour obtenir chacune de ces valeurs V1-VN, une phase d'apprentissage est effectuée. Toutefois, il serait possible d'entrer directement en mémoire un volume de référence V1-VN lorsqu'il est connu.

. Lors d'une phase d'utilisation, l'utilisateur sélectionne le volume de référence V1-VN correspondant au remplissage souhaité via l'interface 31 ou l'étiquette souhaitée, et actionne le dispositif de manière à exécuter le programme 29.4 qui déclenche la phase d'utilisation. L'utilisateur peut sélectionner le volume de référence V1-VN directement ou indirectement via l'étiquette d'utilisateur util1-utilN auquel il est associé.

. Le contrôleur 28 indique ensuite, s'il y a lieu, par un signal sonore et/ou lumineux à l'utilisateur qu'il est prêt pour le remplissage, la vanne 7 étant en position ouverte.

. L'utilisateur peut alors déclencher l'écoulement de liquide, de sorte que le microprocesseur 28 mesure le volume de liquide V écoulé en intégrant le débit de liquide mesuré via le débitmètre sur la période de temps sur laquelle il a été mesuré. En exécutant le programme 29.5, le microprocesseur 28 compare le volume V mesuré avec le volume de référence V1-VN. Lorsque le volume de liquide écoulé V atteint le volume de référence V1-VN, le contrôleur 27 exécute le programme 29.6 et commande le moteur 13 de manière à positionner la vanne 7 en position fermée.

. Le dispositif émet alors un signal lumineux et/ou sonore pour avertir l'utilisateur que le cycle d'utilisation est terminé.

. L'utilisateur peut alors éteindre le dispositif 1 et couper l'arrivée de liquide à la source, de manière que la vanne 7 se déplace en position ouverte. En effet, de préférence, la vanne 7 est positionnée par défaut en position ouverte, de sorte que lorsque le dispositif est à l'arrêt le liquide peut passer à travers le dispositif sans problème.

. Dans une réalisation, un compteur CT de volume stocke en mémoire 30 le volume global de liquide consommé depuis sa dernière remise à zéro. Le dispositif peut également stocker en mémoire 30 des compteurs partiels C1-CN associés à chacun des volumes de référence V1-VN mémorisés. Ces compteurs C1-CN stockent la consommation engendrée par chaque utilisateur util1-utilN correspondant à chaque volume de référence V1-VN. Les valeurs de ces compteurs CT, C1-CN peuvent être affichées sur l'écran 31.1 à la demande de l'utilisateur.

. Par ailleurs, le dispositif 1 peut comporter un capteur 26 de température positionné à l'intérieur de la cavité 2.1 et relié à une entrée du microprocesseur 28. Ainsi lorsque le programme 29.7 est exécuté, la valeur de température Temp transmise au microprocesseur 28 et stockée dans la mémoire 30 est affichée sur l'écran 31.1.

. Dans une réalisation, on prévoit un programme qui déclenche une alarme lorsqu'un écart de température supérieur à une valeur seuil, par exemple 0.5 degré, est détecté.

. L'utilisateur communique avec le dispositif via une interface sonore ou visuelle, telle que des LEDS ou un écran indiquant des informations, telles que le volume (mesuré V ou de référence V1-VN ou cumulé CT, C1-CN), et/ou la température et/ou l'utilisateur (util1-utilN).

. La vue de face représentée sur la figure 4a montre que le dispositif présente une longueur L de 11 cm environ et une largeur I de 7 cm environ. Par ailleurs, la vue de côté représentée sur la figure 4b montre que le dispositif présente une profondeur p d'environ 6 cm.

. La figure 5 montre une architecture horizontale du dispositif 1 dans laquelle l'axe de rotation 16 du moteur est perpendiculaire à l'axe 5 de symétrie du carter 2, le moteur 13 s'étendant alors suivant une direction horizontale par rapport au carter 2 qui s'étend suivant une direction verticale.

. La batterie 34 assurant l'alimentation du moteur 13 est positionnée derrière la plaque portant le contrôleur 27. En variante, la batterie 34 est remplacée par une génératrice positionnée à l'intérieur de la cavité 2.1 qui transforme l'énergie de l'écoulement du liquide en énergie électrique pour l'alimentation du moteur 13.

. En outre, le dispositif 1 selon l'invention peut être commandé à distance par une télécommande 35 pour enclencher les phases d'apprentissage et d'utilisation. A cet effet, le contrôleur 27 et la télécommande 35 sont équipés chacun d'un module 37, 38 de type bluetooth qui échangent entre eux des données via une liaison radio 40.

. En variante, le moteur actionne directement la vanne 7 ou est relié à cette vanne 7 par un ensemble d'engrenages coniques.

. En variante, la vanne 7 en forme de boule est remplacée par tout autre type de vanne apte à arrêter l'écoulement de fluide, comme par exemple une vanne à clapet.

. La figure 6 montre une représentation schématique d'un générateur/débitmètre 45 selon l'invention installé à l'intérieur d'un canal 47 présentant une paroi 47.1 à l'intérieur duquel circule un liquide. Ce générateur/débitmètre 45 est installé à l'intérieur du canal 47 en substitution du débitmètre 3, en amont du système de fermeture 7.

. L'élément 45 comporte une roue 49 à aubes installée à l'intérieur du canal 47. A cet effet, un axe 49.1 de rotation de la roue 49 transversal au canal 47 est accroché à la paroi 47.1. Cette roue 49 présente deux faces 50 et 51 entre lesquelles sont positionnées des pales 53, au moins un aimant 55 étant fixé sur une des faces 50. Par ailleurs, une bobine 57 est positionnée à l'extérieur du canal 47 de l'autre côté de la paroi 47.1 en regard de la roue 49. Au moins une ferrite 59 associée à la bobine 57 peut être encastrée ou simplement fixée à la paroi 47.1. Cette ou ces ferrites 59 sont positionnées de sorte que le ou les aimants 55 passe(nt) à leur voisinage lors de la rotation de la roue 49.

. Ainsi, lorsque du liquide s'écoule à l'intérieur du canal 47, il entraîne en rotation la roue 49 et donc le ou les aimants 55 qui génèrent des impulsions électriques I aux bornes de la bobine 57 lors de leur passage au voisinage des ferrites 59. Ces impulsions I sont représentatives de la vitesse de rotation de la roue 49 et donc du débit de liquide à l'intérieur du canal 47.

. Les impulsions I sont transmises à l'unité de commande 27 qui peut les compter sur une période de temps pour en déduire la valeur du débit. En intégrant le débit mesuré sur une période de temps, on en déduit le volume de liquide qui s'est écoulé sur cette période de temps.

. En outre, le courant électrique correspondant aux impulsions I peut être utilisé pour alimenter les différents composants électriques, tels que l'unité de commande 27, ou le moteur 13 du dispositif 1 de contrôle d'écoulement du liquide selon l'invention. Selon une réalisation, il est également possible d'utiliser une batterie qui sera rechargée par le courant généré par l'élément 45, toutefois cela est optionnel.

. En variante, comme représenté sur la figure 7, la roue 49 à aube est remplacée par un élément 60 hélicoïdal présentant une rainure hélicoïdale sur sa périphérie extérieure apte à tourner autour d'un axe 61 qui s'étend suivant la longueur du canal lors de l'écoulement du liquide dans le canal 47.

. Le ou les aimants 55 sont alors fixés sur le contour extérieur de l'élément 60, tandis que les ferrites 59 associées à la bobine 57 sont toujours positionnées sur la paroi 47.1 de sorte que le ou les aimants 55 passe(nt) à leur voisinage lors de la rotation de la roue 49.

. De la même manière que précédemment, le courant correspondant aux impulsions I généré aux bornes de la bobine 57 peut être utilisé pour alimenter les éléments électriques 13, 27 du dispositif et/ou pour calculer le débit du liquide à l'intérieur du canal 47.

. En variante, les ferrites 59 sont accrochées à l'élément mobile 49, 60 tandis que les aimants 55 sont fixés à la paroi du canal 47.

## Revendications

1. Procédé pour délivrer une quantité d'eau non déterminée au préalable mais déterminée par apprentissage au moyen d'un dispositif de contrôle d'écoulement d'un liquide commandé par un utilisateur, **caractérisé en ce qu'**il comporte les étapes suivantes :
- une étape de relier le dispositif de contrôle d'écoulement d'un liquide à un canal d'arrivée de liquide,
- une étape, pour l'utilisateur, d'indiquer le commencement et la fin d'une phase d'apprentissage,
- une étape, pour le dispositif de contrôle d'écoulement du liquide, de calculer un volume de liquide écoulé pendant la phase d'apprentissage,
- une étape, pour le dispositif de contrôle d'écoulement du liquide, de mémoriser, en tant que valeur de référence (V1-VN), la valeur du volume de liquide calculé lors de la phase d'apprentissage,
- une étape, pour le dispositif de contrôle d'écoulement du liquide, lors d'une phase d'utilisation, de mesurer un volume (V) de liquide écoulé, et
- une étape, pour le dispositif de contrôle d'écoulement du liquide, d'arrêter l'écoulement du liquide lorsque la valeur du volume mesuré atteint la valeur de référence (V1-VN) qui a été calculée et enregistrée lors de la phase d'apprentissage,
- de manière à pouvoir délivrer sans surveillance de façon reproductible un volume de liquide qui aura été calculé préalablement pendant la phase d'apprentissage.

2. Procédé selon la revendication 1, **caractérisé en ce qu'**il comporte l'étape, pour le dispositif de contrôle d'écoulement du liquide, de calculer la valeur de volume de liquide écoulé sur la phase d'apprentissage à partir de la durée (t) de la phase d'apprentissage et du débit mesuré sur ladite phase d'apprentissage.

3. Procédé selon la revendication 1 ou 2, **caractérisé en ce qu'**il comporte l'étape, pour le dispositif de contrôle d'écoulement du liquide, de déclencher une alarme lorsque le volume de référence (V1-VN) est atteint.

4. Procédé selon l'une des revendications 1 à 3, **caractérisé en ce qu'**il comporte l'étape, pour le dispositif de contrôle d'écoulement du liquide, de mémoriser plusieurs valeurs de référence (V1-VN).

5. Procédé selon la revendication 4, **caractérisé en ce qu'**il comporte l'étape, pour le dispositif de contrôle d'écoulement du liquide, d'associer une étiquette (util1-utilN) correspondant à un utilisateur à chacun des volumes de référence (V1-VN) mémorisés afin de faciliter leur identification.

6. Dispositif de contrôle d'écoulement d'un liquide caractérisé en ces qu'il comporte :
- un embout (25) pour relier le dispositif de contrôle d'écoulement d'un liquide à un canal d'arrivée de liquide,
- une interface (31) permettant à un utilisateur d'indiquer le commencement et la fin d'une phase d'apprentissage,
- des moyens (27-30) pour calculer le volume de liquide écoulé sur ladite phase d'apprentissage,
- des moyens (30) pour mémoriser, en tant que volume de référence (V1-VN), la valeur du volume de liquide calculé pendant la phase d'apprentissage, et
- des moyens (7, 13) pour arrêter l'écoulement du liquide lorsque la valeur du volume mesuré a atteint la valeur du volume de référence (V1-VN) qui a été calculé et enregistré lors de phase d'apprentissage,
- de manière à pouvoir délivrer sans surveillance de façon reproductible un volume de liquide qui aura été calculé préalablement pendant la phase d'apprentissage.

7. Dispositif selon la revendication 6, **caractérisé en ce que** les moyens pour calculer le volume de référence comportent des moyens pour mesurer ledit volume à partir du débit mesuré sur la phase d'apprentissage et de la durée de la phase d'apprentissage.

8. Dispositif selon la revendication 6 ou 7, **caractérisé en ce qu'**il comporte un débitmètre (3) de type optique ou électromagnétique.

9. Dispositif selon la revendication 6 ou 7, **caractérisé en ce que** les moyens pour mémoriser (30) sont aptes à mémoriser plusieurs valeurs de référence (V1-VN).

10. Dispositif selon la revendication 9, **caractérisé en ce qu'**il comporte des moyens pour associer une étiquette (util1-utilN) correspondant à un utilisateur à chacun des volumes de référence (V1-VN) mémorisés, afin de faciliter leur identification.

11. Dispositif selon l'une des revendications 6 à 10, **caractérisé en ce que** les moyens pour arrêter l'écoulement du liquide comportent une vanne (7) en forme de boule munie d'une cavité (8) traversante, cette vanne (7) étant entraînée en rotation par un moteur (13).

12. Dispositif selon l'une des revendications 6 à 11, **caractérisé en ce que** l'embout (25) présente un filetage de manière à entrer en coopération avec des canaux d'arrivée de liquide, tels que des robinets de baignoire, présentant des taraudages.

13. Dispositif selon l'une des revendications 6 à 12, **caractérisé en ce qu'**il comporte des moyens (37) lui permettant d'être commandé à distance par une télécommande (38).

14. Dispositif selon l'une des revendications 6 à 13, **caractérisé en ce qu'**il comporte une batterie (34) ou une génératrice qui transforme l'énergie de l'écoulement de liquide en électricité afin d'assurer l'alimentation des moyens (7, 13, 14) pour arrêter l'écoulement du liquide.

15. Dispositif selon l'une des revendications 6 à 14, **caractérisé en ce qu'**il comporte des moyens pour déclencher une alarme lorsque le volume de référence (V1-VN) est atteint.

## Patentansprüche

1. Verfahren zum Abgeben einer im Voraus unbestimmten Menge an Wasser, die jedoch durch Erlernen mittels einer durch einen Benutzer zu regelnden Vorrichtung zur Steuerung des Flüssigkeitsdurchflusses bestimmt wird, **dadurch gekennzeichnet, dass** es folgende Schritte umfasst:
- einen Schritt zum Verbinden der Vorrichtung zur Steuerung des Flüssigkeitsdurchflusses mit einem Flüssigkeitszufuhrkanal,
- einen Schritt für den Benutzer, um den Anfang und das Ende einer Lernphase anzugeben,
- einen Schritt für die Vorrichtung zur Steuerung des Flüssigkeitsdurchflusses, um das Volumen der während der Lernphase durchgeflossenen Flüssigkeit zu berechnen,
- einen Schritt für die Vorrichtung zur Steuerung des Flüssigkeitsdurchflusses zum Speichern des während der Lernphase berechneten Werts des Flüssigkeitsvolumens als Referenzwert (V1-VN),
- einen Schritt für die Vorrichtung zur Steuerung des Flüssigkeitsdurchflusses zum Messen des Volumens (V) der während einer Nutzungsphase durchgeflossenen Flüssigkeit, und
- einen Schritt für die Vorrichtung zur Steuerung des Flüssigkeitsdurchflusses zum Stoppen des Flüssigkeitsdurchflusses, wenn der Wert des gemessenen Volumens den Referenzwert (V1-VN) erreicht, der während der Lernphase berechnet und gespeichert wurde,
- um unbeaufsichtigt und auf wiederholte Art das Flüssigkeitsvolumen abgeben zu können, das zuvor während der Lernphase berechnet wurde.

2. Verfahren nach Anspruch 1, **dadurch gekennzeichnet, dass** es für die Vorrichtung zur Steuerung der Flüssigkeitsabgabe einen Schritt zum Berechnen des Werts des während der Lernphase durchgeflossenen Flüssigkeitsvolumens anhand der Dauer (t) der Lernphase und des während der besagten Lernphase gemessenen Durchflusses umfasst.

3. Verfahren nach Anspruch 1 oder 2, **dadurch gekennzeichnet, dass** es für die Vorrichtung zur Steuerung des Flüssigkeitsdurchflusses einen Schritt zum Auslösen eines Alarms umfasst, wenn das Referenzvolumen (V1-VN) erreicht wird.

4. Verfahren nach einem der Ansprüche 1 bis 3, **dadurch gekennzeichnet, dass** es für die Vorrichtung zur Steuerung des Flüssigkeitsdurchflusses einen Schritt zum Speichern mehrerer Referenzwerte (V1-VN) umfasst.

5. Verfahren nach Anspruch 4, **dadurch gekennzeichnet, dass** es für die Vorrichtung zur Steuerung des Flüssigkeitsdurchflusses einen Schritt zum Zuordnen eines Etiketts (util1-utilN) umfasst, das für jedes gespeicherte Referenzvolumen (V1-VN) jeweils einem Benutzer entspricht, um ihn leichter erkennen zu können.

6. Vorrichtung zur Steuerung des Flüssigkeitsdurchflusses, **dadurch gekennzeichnet, dass** sie umfasst:
- ein Ansatzstück (25) zum Verbinden der Vorrichtung zur Steuerung des Flüssigkeitsdurchflusses mit einem Flüssigkeitszufuhrkanal,
- eine Schnittstelle (31), um es einem Benutzer zu ermöglichen, den Anfang und das Ende einer Lernphase anzugeben,
- Mittel (27-30) zum Berechnen des Volumens der während der besagten Lernphase durchgeflossenen Flüssigkeit,
- Mittel (30) zum Speichern des während der Lernphase berechneten Werts des Flüssigkeitsvolumens als Referenzvolumen (V1-VN), und
- Mittel (7, 13) zum Stoppen des Flüssigkeitsdurchflusses, wenn der Wert des gemessenen Volumens den Wert des Referenzvolumens (V1-VN) erreicht hat, der während der Lernphase berechnet und gespeichert wurde,
- um unbeaufsichtigt und auf wiederholte Art das Flüssigkeitsvolumen abgeben zu können, das zuvor während der Lernphase berechnet wurde.

7. Vorrichtung nach Anspruch 6, **dadurch gekennzeichnet, dass** die Mittel zum Berechnen des Referenzvolumens Mittel zum Messen des besagten Volumens anhand des während der Lernphase und der Dauer der Lernphase gemessenen Durchflusses umfassen.

8. Vorrichtung nach Anspruch 6 oder 7, **dadurch gekennzeichnet, dass** sie einen optischen oder elektromagnetischen Durchflussmesser (3) umfasst.

9. Vorrichtung nach Anspruch 6 oder 7, **dadurch gekennzeichnet, dass** die Mittel zum Speichern (30) dazu in der Lage sind, mehrerer Referenzwerte (V1-VN) zu speichern.

10. Vorrichtung nach Anspruch 9, **dadurch gekennzeichnet, dass** sie Mittel zum Zuordnen eines Etiketts (util1-utiLN) umfasst, das für jedes gespeicherte Referenzvolumen (V1-VN) jeweils einem Benutzer entspricht, um ihn leichter erkennen zu können.

11. Vorrichtung nach einem der Ansprüche 6 bis 10, **dadurch gekennzeichnet, dass** die Mittel zum Stoppen des Flüssigkeitsdurchflusses ein Ventil (7) in Kugelform umfassen, das mit einem durchgehenden Hohlraum (8) versehen ist, wobei die Rotation dieses Ventils (7) von einem Motor (13) bewirkt wird.

12. Vorrichtung nach einem der Ansprüche 6 bis 11, **dadurch gekennzeichnet, dass** das Ansatzstück (25) ein Gewinde aufweist, um an Flüssigkeitszufuhrkanäle wie Badewannenarmaturen angeschlossen werden zu können, die mit Gegengewinden versehen sind.

13. Vorrichtung nach einem der Ansprüche 6 bis 12, **dadurch gekennzeichnet, dass** sie Mittel umfasst (37), die es ermöglichen, sie mit einer Fernbedienung (38) zu steuern.

14. Vorrichtung nach einem der Ansprüche 6 bis 13, **dadurch gekennzeichnet, dass** sie einen Akkumulator (34) oder einen Generator umfasst, um die Energie des Flüssigkeitsdurchflusses in elektrischen Strom zu wandeln und damit die Mittel (7, 13, 14) zum Stoppen des Flüssigkeitsdurchflusses versorgen zu können.

15. Vorrichtung nach einem der Ansprüche 6 bis 14, **dadurch gekennzeichnet, dass** sie Mittel zum Auslösen eines Alarms umfasst, wenn das Referenzvolumen (V1-VN) erreicht ist.

## Claims

1. Process for supplying a quantity of water, not specified beforehand, but determined by learning, by means of a liquid flow control device operated by a user, **characterised by** the following constituent stages:
- A stage of connecting the liquid flow control device to a liquid supply channel;
- A stage, for the users, to indicate the beginning and the end of a learning phase;
- A stage, for the liquid flow control device, to calculate a volume of liquid that flowed during the learning phase,
- A stage, for the liquid flow control device, to memorise, by way of reference value (V1-VN), the value of the liquid volume calculated during the learning phase;
- A stage, for the liquid flow control device, during a utilisation phase, to measure a volume (V) of liquid that has flowed; and
- A stage, for the liquid flow control device, to stop the flow of the liquid when the value of the measured volume reaches the reference value (V1-VN) that was calculated and recorded during the learning phase;
- So as to be able to supply a volume of liquid (calculated beforehand during the learning phase) in a reproducible manner without supervision.

2. Process according to claim 1, **characterised by** comprising a stage, for the liquid flow control device, to calculate the value of the volume of liquid that flowed in the learning phase from the duration time (t) of the learning phase and the flow rate measured during said learning phase.

3. Process according to claim 1 or 2, **characterised by** comprising a stage, for the liquid flow control device, to set off an alarm when the reference volume (V1-VN) is reached.

4. Process according to one of the claims 1 to 3, **characterised by** comprising a stage, for the liquid flow control device, to memorise several reference values (V1-VN).

5. Process according to claim 4, **characterised by** comprising a stage, for the liquid flow control device, to associate a label (util1-utilN) corresponding to a user with each of the reference volumes (V1-VN) memorised so as to make it easier to identify them.

6. Liquid flow control device **characterised by** comprising:
- An adapter (25) to connect the liquid flow control device to a liquid supply channel;
- An interface (31) that enables users to indicate the beginning and the end of a learning phase;
- Means (27-30) to calculate the volume of liquid that flowed during said learning phase;
- Means (30) to memorise, by way of reference volume (V1-VN), the value of the volume of liquid calculated during the learning phase; and
- Means (7, 13) to stop the flow of the liquid when the measured volume has reached the reference volume (V1-VN) that was calculated and recorded during the learning phase;
- So as to be able to supply a volume of liquid (calculated beforehand during the learning phase) in a reproducible manner without supervision.

7. Device according to claim 6, whereby the means for calculating the reference volume comprise means for measuring said volume from the flow rate measured during the learning phase and the duration time of the learning phase.

8. Device according to claim 6 or 7, **characterised by** comprising an optical or electromagnetic flow meter (3).

9. Device according to claim 6 or 7, whereby the means for memorising (30) can memorise several reference volumes (V1-VN).

10. Device according to claim 9, **characterised by** comprising means to associate a label (util1-utilN) corresponding to a user with each of the reference volumes (V1-VN) memorised so as to make it easier to identify them.

11. Device according to one of the claims 6 to 10, where the means for stopping the flow of the liquid comprise a valve (7) in the form of a ball with a through cavity (8), said valve (7) being rotated by a motor (13).

12. Device according to one of the claims 6 to 11, where the adapter (25) has threading in order to engage with the liquid supply channels such as bath taps that have female threads.

13. Device according to one of the claims 6 to 12, **characterised by** comprising means (37) to be operated from a distance by remote control (38).

14. Device according to one of the claims 6 to 13, **characterised by** comprising a battery (34) or a generator that converts the energy from the liquid flow into electricity to supply the means (7, 13, 14) for stopping the flow of the liquid.

15. Device according to one of the claims 6 to 14, **characterised by** comprising means for triggering an alarm when the reference volume (V1-VN) is reached.
